(19) Europäisches Patentamt

European Patent Office

Office européen des brevets

(11) **EP 0 846 747 A1**

(12) **EUROPÄISCHE PATENTANMELDUNG**

(43) Veröffentlichungstag:
10.06.1998 Patentblatt 1998/24

(51) Int. Cl.$^6$: **C09K 17/32**, C09K 7/02,
E21D 9/06, C08L 1/28

(21) Anmeldenummer: 97120718.8

(22) Anmeldetag: 26.11.1997

(84) Benannte Vertragsstaaten:
AT BE CH DE DK ES FI FR GB GR IE IT LI LU MC
NL PT SE

(30) Priorität: 09.12.1996 DE 19651043
28.04.1997 DE 19717899

(71) Anmelder: WOLFF WALSRODE AG
29655 Walsrode (DE)

(72) Erfinder:
• Lange, Werner, Dr.
27374 Visselhövede (DE)

• Pannek, Jörn-Bernd, Dr.
29683 Fallingbostel (DE)
• Kiesewetter, Rene, Dr.
29683 Fallingbostel (DE)
• Voigt, Thomas, Dr.
70567 Stuttgart (DE)

(74) Vertreter: Braun, Rolf, Dr. et al
Bayer AG
Konzernbereich RP
Patente und Lizenzen
51368 Leverkusen (DE)

(54) **Verfahren zur Herstellung sowie Verwendung von Gelen als Additive für einen mechanischen Schildvortrieb**

(57) Verfahren zum Stützen der Ortsbrust und des anstehenden Grundwassers bei Vortriebssystemen, insbesondere mit Erddruckschilden betriebenen Schildsystemen für den Tunnelbau im begehbaren und nichtbegehbaren Bereich sowie Microtunnelling bei dem der abgebaute Boden in der Erddruckkammer mit einem fluidisierenden Medium vermischt und durch gezieltes Abführen des Gemisches in der Erddruckkammer ein dem Erddruck und dem Grundwasserdruck entgegenwirkender Druck erzeugt wird, wobei, daß das dem abgebauten Boden zugeführte fluidisierende Medium ein die Durchlässigkeit des Bodens verringerndes Gel ist und daß durch Mischen und Verrühren im Abbauraum oder der Förderschnecke ein Gemisch aus Boden und Gel hergestellt wird.

EP 0 846 747 A1

**Beschreibung**

Die vorliegende Erfindung beansprucht ein Verfahren zur Herstellung sowie die Verwendung von Gelen oder gelartigen Verbindungen, als Hilfsmittel für einen mechanischen Schildvortrieb. Der Einsatz der erfindungsgemäß beanspruchten Systeme führt bei mit Erddruck betriebenen Schildsystemen im Vergleich zu herkömmlichen Systemen (Bentoniten, Tonaufschlämmungen, Polymerschäumen u.a.) zu einer verbesserten Abbau- und Austragfähigkeit für erbohrtes Erdmaterial, verbesserten Stabilitäten bei höheren in der Abbaukammer bestehenden Drücken sowie zu günstigeren ökotoxikologischen Werten des Abraumes.

Mit der Verbesserung der innerstädtischen Infrastruktur (U-Bahn-Tunnel, Wasser- und Gasrohrleitungen, Kabel für Telekommunikations-, Nachrichtensysteme u.a.) wurden zu Beginn der 60er Jahre eine Reihe von Verfahren für das maschinelle Auffahren von Tunnein in Lockergestein entwickelt, sog. Schildvortriebsverfahren, mit deren Hilfe erbohrtes Gestein schnell, sicher und kostengünstig ausgetragen werden sollte. Die im Laufe der Jahre immer weiter gestiegenen technischen Anforderungen an derartige Schildsysteme sowie die Erweiterung der Einsatzgrenzen und die Anpassung an die sich teilweise auf kurzen Strecken ändernden geologischen Bedingungen (Bodenbeschaffenheit, Überlagerung, Grundwasserverhältnisse u.a.) führten zur Entwicklung vollkommen neuer Methoden auf diesem Gebiet (T. Krause, Diplomarbeit, TU Braunschweig, 1987; DE 2457187, JP HEI 1-239293, HEI 5-59886, HEI 1-121396). Von den verschiedenen Schildsystemen, die sich z. Z. weltweit im Einsatz befinden, setzen sich immer mehr solche Systeme durch, die mit flüssigkeitsgestützter (sog. Suspensionsschilde) oder mit erdgeschützter Ortsbrust (sog. Erddruckschilde) arbeiten.

Bei Hydroschilden wird der erforderliche Stützdruck zur Stabilisierung der Ortsbrust durch eine Suspension aufgebracht, die an der Abbaufläche einen Filterkuchen ausbildet, über den der Stützdruck aufgebracht werden kann. Hier sind insbesondere Bentonit- und Polymersuspensionen im Einsatz. Da das Stützmedium gleichzeitig das Fördermedium für eine hydraulische Abförderung des Abraumes darstellt, ist der gesamte Abraum intensiv mit dem Medium vermischt und muß in einer Separieranlage wieder davon getrennt werden. Der verbleibende Abraum ist jedoch noch mit Restmengen des Stütz- und Fördermediums versetzt und kann in der Regel nicht mehr einer Wiederverwendung zugeführt werden. Da der Abraum auch nach der Separierung normalerweise eine nur geringe mechanische Festigkeit aufweist und damit den Zuordnungskriterien für eine Endlagerung nicht genügt, muß vor der Deponierung u.U. noch eine konstenintensive Nachbehandlung in Form einer Trocknung oder Kalkung vorgeschaltet werden.

Bei Erddruckschilden wird der abzubauende Boden selber als Stützmedium verwendet. In sehr günstigen Fällen kann der Boden unbehandelt bleiben (z.B. bei Feinsand bis Tonfraktionen mit weicher Konsistenz), so daß der gesamte Abraum weitgehend unverändert zu Tage gefördert und abgelagert bzw. wiederverwendet werden kann. Bei weniger günstigen Bodenverhältnissen (insbesondere Sand bis Kiesfraktionen mit sehr geringen Feinkornanteilen in Abhängigkeit von der Mineralogie auch Böden der Schluff- bis Tonfraktion) müssen auch beim Erddruckschild Zugabestoffe zur Aufbereitung (= Konditionierung) des Bodens zugegeben werden.

Diese als Konditionierungsmittel bezeichneten Zugabestoffe sollen den gelösten Boden ausreichend fließfähig und geschmeidig machen, so daß er innerhalb der Abbaukammer zu den Austragöffnungen und anschließend durch die Förderschnecke transportiert werden kann. Gleichzeitig muß der Boden ausreichend wasserundurchlässig sein, damit das ggf. anstehende Grundwasser nicht durch die Förderschnecke durchschlägt und somit unkontrolliert Grundwasser und Bodenmaterial aus der Abbaukammer ausgetragen wird. Dies würde zu einem Kollaps der Ortsbrust und ggf. zu Tagbrüchen führen. In Abhängigkeit der Bodenzusammensetzung und der eingesetzten Konditionierungsmittel wird der abgebaute Boden bei Erddruckschilden mit herkömmlichen Verfahren (z.B. Loren, Förderbändern oder hydraulisch über Rohrleitungen) an die Geländeoberfläche transportiert und dort bei Bedarf in Separierungs- und Aufbereitungsanlagen behandelt.

Die gebräuchlichen Varianten der Erddruckschilde und die entsprechenden Konditionierungsmittel, wie z.B. Bentonitsuspensionen, Celluloseether (z.B. Carboxyethylcelluloseether) verbunden mit z.T. mechanisch wirkenden Zugabestoffen wie z.B. Sand, Glimmer oder Zement, sind in der Literatur beschrieben (siehe z.B. T. Krause, Diplomarbeit, TU Braunschweig, 1987). In Japan hat sich die Zugabe von Polymerschäumen als eine wirksame Methode erwiesen. Das Prinzip und die Vorteile eines solchen Verfahrens gegenüber herkömmlichen Schildsystemen werden z.B. in JP 90 0018886 und JP 88 0061354 erwähnt (siehe auch: Firmenbroschüre der Fa. Komatsu Ltd., (The Development of Chemical Plug Shield Tunnelling", Japan 1990; Firmenbroschüre der Fa. Obayashi Corp. "Development of Chemical Foam Injection Shield Tunnelling Method", Japan 1992; Y. Hanyuda, T. Fujiwara, Research Inst. Obayashi, S. 21 (1988)).

Im physikalischen Sinn stellen Schäume kolloidchemische Systeme aus gasgefüllten, kugel- oder polyederförmigen Zellen dar, die durch flüssige, halbflüssige, hochviskose oder feste Zellstege begrenzt werden (Römpp Chemielexikon 9. Aufl. (1992) Bd. 5, Seite 4014, Hrsg.: J. Falbe, M. Regitz, Georg Thieme Verlag, Stuttgart, New York). Sie sind somit Dispersionen eines Gases in einer Flüssigkeit.

Der Vorteil des Einsatzes von Polymerschäumen für die Bodenkonditionierung gegenüber herkömmlichen Systemen, wie z.B. Suspensionen, besteht darin, daß bei gleichen Volumina deutlich geringere Flüssigkeitsmengen in den Boden eingebracht werden können. Das Verfahren zur Herstellung derartiger Polymerschäume wird z.B. in GB 2263490 A näher beschrieben. Die Schaumbildung erfolgt dabei in einem Schaumgenerator, in dem eine schaumfähige Flüssigkeit mit Druckluft verwirbelt wird. Diese schaumfähige Flüssigkeit besteht dabei aus Schaumbildnern und Schaumstabilisatoren sowie ggf. weiteren Additiven. Als Schaumbildner kommen oberflächenaktive Substanzen (Tenside), wie z.B. natürliche Proteine oder Alkylethersulfate, zum Einsatz. Die Anwesenheit von Schaumstabilisatoren, wie z. B. wasserlösliche Celluloseether (Methylcellulose, Carboxymethylcellulose, Ethylcellulose), führt zu einer deutlichen Verfestigung des Schaumes. Als weitere Additive dienen wasserabsorbierende Harze sowie Phasentransferkatalysatoren, wie z.B. Benzalconiumchlorid oder Alkyl-Benzyl-Dimethylammoniumchlorid.

Die intensive Durchmischung des in der Abbaukammer vorliegenden Bodens mit dem so erzeugten Polymerschaum führt aufgrund der im Korngerüst wirksam werdenden Adhäsionskräfte zu einer während der Lebenszeit des Schaumes wirksamen Veränderung der Eigenschaften des Bodens.

Das Gemisch aus Boden und Schaum wird anschließend mit herkömmlichen Methoden an die Geländeoberfläche transportiert und mit speziellen Enzymen (z.B. Proteasen, Lipasen (siehe JP 90 001 8886)) behandelt, um so den Abbau der eingesetzten schaumerzeugenden Komponenten zu beschleunigen und eine umweltverträgliche Endlagerung des Boden-Schaumgemisches sicherzustellen.

In der Praxis hat sich gezeigt, daß die Stabilität des Schaums im Korngerüst je nach den vor Ort bestehenden Verhältnissen abnehmen kann, so daß dem anstehenden Grundwasserdruck aufgrund der damit einhergehenden Wasserdurchlässigkeit des Bodens oftmals nicht mehr standgehalten werden kann (Gefahr des sog. „Tagbruchs"). Eine verbesserte Konditionierung von vorzugsweise nicht-bindigen Böden macht daher den Einsatz von den Boden besser abdichtenden, die fehlenden Feinkornfraktionen ersetzenden Zusatzmitteln erforderlich. Zudem erfordert der Einsatz von Enzymen umfangreiche Sicherheitsvorkehrungen (z.B. pH-Wert- und Temperaturkontrolle), um z.B. Inhibierungen von Enzymaktivitäten oder Kontaminierungen von Lagertanks zu vermeiden. Eine gute biologische Abbaubarkeit der eingesetzten Komponenten ist darüber hinaus per se noch nicht mit einer guten Umweltverträglichkeit gleichzusetzen, da die Abbauprodukte eine höhere Ökotoxizität aufweisen können als die Ausgangsverbindungen selbst (s. z.B. p-Alkylphenoloxethylate). Wasserlösliche Spaltprodukte von biologisch leicht abbaubaren Verbindungen führen zu einer Erhöhung des Anteils des im Grundwasser gelösten organisch gebundenen Kohlenstoffs (DOC-Wert) und damit zu einer Belastung der Umwelt. Eine unbedenkliche und kostengünstige Deponierung des ausgehobenen Bodens ist damit nicht gewährleistet, so daß aufwendige Nachbehandlungen (z. B. Ausspülen des Bodens auf den zulässigen Grenzwert) oder kostenintensive Zwischen- (sog. temporäre Lagerung) oder Endlagerungen in speziell hierfür vorgesehenen Deponien (sog. Sondermülldeponien) erforderlich sind.

Ziel der Entwicklung muß es daher sein, Systeme bereitzustellen, die die positiven Eigenschalten der herkömmlichen Polymerschäume bzw. Bentonite besitzen, jedoch kostengünstig herstellbar sind, in der Anwendung keinen hohen technischen Aufwand erforderlich machen, ein hohes Tragevermögen für den ausgehobenen Boden besitzen und auch gegenüber höheren Drucken eine hinreichende Wasserundurchlässigkeit des Bodens garantieren. Ferner muß das System ohne aufwendige Nachbehandlungen ökotoxikologisch unbedenklich deponierbar sein und im Vergleich zu Bentonitsuspensionen über eine ausreichend hohe mechanische Festigkeit verfügen, um so den Zuordnungskriterien zur Endlagerung in einer Deponie zu genügen.

Überraschenderweise wurde nun gefunden, daß durch den Einsatz von Gelen als Hilfsmittel beim Tunnelbau, insbesondere bei der Schildvortriebstechnik für Erddruckschilde, der Stand der Technik verbessert wird. Gele sind im Unterschied zu Schäumen dadurch charakterisiert, daß der Verlustmodul G" kleiner ist als der Speichermodul G', der die Elastizität des Materials kennzeichnet [Journal of Texture Studies 26 (1995) Nr. 4, S. 391 - 400 und Polymer Gels & Networks 1, S. 5 - 18(1993)].

Bei der Herstellung der erfindungsgemäß beanspruchten Gele wird auf die bestehende Technik zur Erzeugung von Polymerschäumen Bezug genommen (siehe z.B. U. Maidl, Dissertation Ruhr-Universität Bochum, 1995). Für die Bereitstellung der erfindungsgemäß beanspruchten Gele wird ein wasserlösliches Biopolymer allein oder mit einer oberflächenaktiven Komponente (Tensid) und einem Vernetzungsreagenz und Wasser intensiv vermischt. Das vorgenannte Gemisch wird in einem Schaumgenerator mit Druckluft oder Stickstoff verwirbelt. Je nach Konzentration des verwendeten Vernetzungsreagenzes kommt es hierbei zur Ausbildung zeitlich stabiler hochfester Gele, die ein gegenüber dem Stand der Technik verbessertes Tragevermögen für erbohrtes Erdmaterial besitzen. Das Vermischen eines derartigen Gels mit dem in der Erddruckkammer vorliegenden Abraum führt zu einer Verbesserung der Fließfähigkeit und zu einer verringerten Wasserdurchlässigkeit auch bei hohen Grundwasserdrücken. Das Gemisch aus Abraum und Gel läßt sich dabei problemlos aus der Erddruckkammer durch herkömmliche Verfahren, z.B. Schneckerförderer, austragen und ist ohne weitere Nachbehandlungen deponierbar. Je nach anwendungstechnischen Erfordernissen können dabei Zugabemengen von oberflächenaktiver Komponente und wasserlöslichem Biopolymer von 10 - 80 Vol.-% oder darüber zum Einsatz gelangen. Gegenüber dem Stand der Technik kommt es hierbei überraschenderweise zu deutlich verminderten Auswaschprozessen, die zu einer geringeren Belastung der Umwelt, insbesondere des Grundwassers führen.

Im Rahmen der vorliegenden Erfindung werden unter den zum Einsatz gelangten Komponenten (Tensiden) kationische Tenside (z.B. Alkylammonium-Verbindungen, Imidazolinium-Verbindungen), nicht-ionische Tenside (z.B. Fettalkoholethoxylate, Alkylenolethoxylate, Fettaminoethoxylate, Zuckertenside, Fettsäureethoxylate, Fettsäureesterethoxylate, Alkylpolyglycoside, Amphotenside), insbesondere jedoch Aniontenside (z.B. Alkylbenzolsulfonate, Alkansulfonate, Fettalkoholsulfate oder Fettalkolethersulfate) verstanden.

Unter den erfindungsgemäß beanspruchten wasserlöslichen Biopolymeren werden insbesondere Polysaccharidether, vorzugsweise Celluloseether oder Celluloseetherabmischungen verstanden. Dabei werden insbesondere solche Produkte beansprucht, die aufgrund ihrer Struktur bzw. physikalisch-chemischen Eigenschaften durch den Zusatz der weiter unten bezeichneten Vernetzungsmittel zur Ausbildung von Gelen bzw. gelartigen Strukturen befähigt sind. Eingesetzt werden können sowohl ionische als auch nichtionische Biopolymere, insbesondere Polysaccharidether, vorzugsweise Celluloseether. Als ionische Biopolymere werden dabei technische (salzhaltige) oder gereinigte Polysaccharidether, wie z.B. Carboxyalkylcelluloseether, insbesondere Carboxymethylcellulose; Sulfoalkylcelluloseether, insbesondere Sulfoethylcellulose und Sulfomethylcellulose; Carboxyalkylhydroxyalkylcelluloseether, insbesondere Carboxymethylhydroxyethylcellulose und Carboxymethylhydroxypropylcellulose; Sulfoalkylhydroxyalkylcellulose, insbesondere Sulfoethylhydroxyethylcellulose und Sulfoethylhydroxypropylcellulose; Sulfoalkylalkylcelluloseether, insbesondere Sulfoethylmethylcellulose, Sulfopropylmethylcellulose; Carboxyalkylsulfoalkylcellulloseether, insbesondere Carboxyethylsulfoethylcelluloseether und Carboxymethylsulfopropylcelluloseether; Dihydroxypropylcarboxymethyl- und Dihydroxpropylsulfoethylcelluloseether, Dialkylaminoalkylcelluloseether, wie z.B. Diethylaminoethylcelluloseether; Dialkylaminoalkylhydroxyalkylcelluloseether, wie z.B. Diethylaminoethyl-hydroxyethylcelluloseether; modifizierte Stärken, wie z.B. carboxyalkylierte Stärken (z.B Carboxymethylstärke) und modifizierte Guarprodukte (z.B. Carboxymethylguar) beansprucht.

Bevorzugte nicht-ionische Biopolymere sind technische (salzhaltige) oder gereinigte Polysaccharidether, wie z.B. Alkylcelluloseether, insbesondere Methylcellulose, Ethylcellulose; Alkylhydroxyalkylcelluloseether, insbesondere Methylhydroxyethylcellulose, Methylhydroxypropylcellulose, Ethylhydroxyethylcellulose, Ethylhydroxypropylcellulose; Hydroxyalkylcelluloseether, insbesondere Hydroxyethylcellulose und Hydroxypropylcellulose; Alkenylcelluloseether, insbesondere Allylcelluloseether; Alkylenalkylcelluloseether, insbesondere Allylmethylcelluloseether und Allylethylcellulose; modifizierte Stärken, wie z.B. alkylierte und hydroxyalkylierte Stärkeether (z.B. Methyl-, Ethylstärke, Hydroxyethyl- und Hydroxypropylstärke) und modifizierte Guarprodukte (z.B. Hydroxypropylguar).

Bei der Herstellung der erfindungsgemäß beanspruchten Gele können neben den vorgenannten wasserlöslichen Biopolymeren, insbesondere wasserlöslichen Polysaccharidethern, auch physikalische Abmischungen aus z.B. reversibel vernetzten oder unvernetzten Hydrokolloidzusammensetzungen und vernetzten oder unvernetzen Hydrokolloiden verwendet werden (siehe hierzu EP 0686 666 A1, EP 0407 838 A1, EPA 0597 364). Für die Herstellung der Gele können Biopolymere unterschiedlichen Molekulargewichts eingesetzt werden. Zur Erzielung hoher Ergiebigkeiten werden dabei insbesondere hochmolekulare Komponenten bevorzugt verwendet. Machen ökonomische oder technische Notwendigkeiten den Einsatz von Biopolymerlösungen, insbesondere Polysaccharidetherlösungen mit hohem Wirkstoffgehalt, also geringem Wassergehalt erforderlich, können auch niedermolekulare Komponenten oder Abmischungen von hoch- und niedermolekularen Verbindungen zum Einsatz kommen. Je nach technischen Erfordernissen können dabei mehr elastische oder eher plastische Gele erhalten werden. Z.B. werden mit hohen Konzentrationen niedrigviskoser Biopolymere, insbesondere Polysaccharidether, bevorzugt Carboxymethycelluloseether, mehr elastische Gele erhalten als mit hochmolekularen Produkten.

Im Rahmen der vorliegenden Erfindung werden unter Vernetzungsmittel Elektrolyte, insbesondere wäßrige Lösungen von polyvalenten Metallkationen, wie z.B. von Zirkonium, Titan, Antimon, Bor, Aluminium, Calcium, Eisen, Magnesium, Silber, Zink, Chrom und Blei verstanden. Je nach Einsatz der verwendeten Agentien müssen in der Regel spezifische Bedingungen hinsichtlich des pH-Wertes, der Temperatur sowie anderer Chemikalien u.a. eingehalten werden, damit die Komplexierungsreaktion zwischen dem Vernetzungsmittel und dem verwendeten wasserlöslichen Biopolymer, insbesondere Polysaccharid, stattfindet. Bei Einsatz von antimonhaltigen Netzmitteln ist es z.B. erforderlich, daß das wäßrige Gel einen spezifischen pH-Wert und eine spezifische Temperatur besitzt, bevor die gelbildende Reaktion erfolgt. Andere metallhaltige Elektrolyte wie z.B. vorliegenden Erfindung werden insbesondere solche Vernetzungsmittel verwendet, die ökotoxikologisch unbedenklich sowie kostengünstig einsetzbar sind. Insbesondere werden solche Vernetzungsmittel beansprucht, die mit geeigneten wasserlöslichen Polysacchariden bzw. Polysaccharidethern reversible Gele bzw. gelartige Strukturen ausbilden. Geeignete Vernetzungsmittel sind z.B. Bor- oder Aluminium-Verbindungen (siehe z.B. DE 4024968 A1; Y. X. Zhang, J. Macromol. Chem. 1425 (8), 955 (1980) und R. L. Davidson, Handbook of Water Soluble Gums and Resins, Chapter 6, 1980).

Die erfindungsgemäß beanspruchte Zubereitung aus Hydrokolloid, insbesondere Polysaccharidether, bevorzugt Celluloseether oder Celluloseetherabmischung, und Tensid kann ggf. weitere unveredelte Polysaccharide enthalten. Ihr Einsatz gestattet es, die Zubereitung reversibel zu vernetzen, so daß ein klumpenfreies Dispergieren der erfindungsgemäß beanspruchten Mischung möglich ist. Ferner können durch den Einsatz von natürlich vorkommenden, nativen, unveredelten Polysacchariden preisgünstige Abmischungen bereitgestellt werden, die darüber hinaus den Vorteil besitzen, daß sie toxikologisch unbedenklich einsetzbar sind und - sofern sie wasserunlöslich sind - aus dem zu deponierenden Boden-Schaum-Gemisch nicht ausgewaschen werden und damit zu keiner Belastung des Grundwassers führen. Im Rahmen der vorliegenden Erfindung werden dabei unter Polysaccharid natürliche, native, unveredelte Biopolymere, wie z.B. Xanthan, Stärken, Guar, natürliche Gummi, Johannisbrotkernmehl, Traganth, Tamarinde, Alginate, Proteine, natürliche Holzfaserstoffe, wie Lignin und Hemicellulosen, insbesondere aber Cellulosechemiezellstoffe, wie z.B. Linters-, Roh-Linters, Nadelholz-Sulfit-, Nadelholz-Sulfat- und Laubholzzellstoffe oder Gemische hieraus verstanden.

Der Anteil des nicht-ionischen bzw. ionischen Hydrokolloids - insbesondere wasserlöslichen Celluloseethers - bezogen auf die Summe aus nicht-ionischem und ionischem Hydrokolloid kann je nach anwendungstechnischen Notwendigkeiten und Erfordernissen variieren. Die Menge des nicht-ionischen Celluloseethers beträgt hierbei 0,1 - 99,9 Gew.-%, insbesondere 1 - 99 Gew.-%, vorzugsweise 10 - 90 Gew.-%. Die Menge des ionischen Celluloseethers kann somit 99,9 - 0,1 Gew.-%, insbesondere 99 - 1 Gew.-%, vorzugsweise 90 - 10 Gew.-% betragen.

Die Summe aus ionischem und nicht-ionischem Hydrokolloid bezogen auf den gesamten Anteil aus wasserlöslichem Biopolymer, Vernetzungsmittel und Tensid beträgt bis zu 99,9 %, insbesondere bis zu 98 %.

Als Quellmittel werden vorzugsweise toxikologisch unbedenkliche Systeme, wie Wasser oder wäßrig-alkoholische Gemische eingesetzt. Das Verfahren zur Herstellung der erfindungsgemäß beanspruchten Zubereitung kann nach den üblichen, literaturbekannten Methoden durchgeführt werde (s. z.B. EP 0 407 838 B1, EP 0 686 666 A1, EP 0 597 364 A1, US 4,373,959, DE 31 03 338 A1 und dort zitierte Literatur).

Der Einsatz der vorgenannten Abmischungen macht eine homogene und intensive Durchmischung aller Komponenten erforderlich. Das Verfahren der physikalischen Durchmischung bzw. die Art des verwendeten Mischaggregates ist Stand der Technik und für das Wesen der vorliegenden Erfindung unerheblich und somit auch nicht Gegenstand der Erfindung. Geeignete Mischaggregate sind z.B. geschlossene Mischbehälter oder Mischer mit rotierenden Mischwerkzeugen. Zur Vermeidung von Agglomeraten oder Entmischungen ist es ferner möglich, den Mischvorgang mit einem Mahlvorgang zu verbinden, Vormischungen herzustellen oder die Homogenisierung durch die Benetzbarkeit mit Zusatzstoffen zu verbessern. Geeignete Apparaturen hierfür sind z.B. Kneter, Feuchtgutmischer, Granuliertrommeln, Pelletierteller oder -trommeln.

Die erfindungsgemäß beanspruchten oben bezeichneten Zubereitungen können zusätzlich nach dem Stand der Technik übliche Hilfsstoffe, insbesondere Füllstoffe, Konservierungsmittel, Luftporenbildner, Phasentransferkatalysatoren, Emulgatoren, dispergierende- oder absorbierende Polymere (z.B. Harze) u.ä. oder Gemische hieraus enthalten. Derartige Hilfsstoffe werden vorzugsweise in Mengen von maximal 35 %, insbesondere bis zu 25 % eingesetzt, ohne dabei das Wesen der vorgenannten erfindungsgemäß beanspruchten Zubereitung zu verändern.

Die Erfindung wird nachfolgend anhand von bevorzugten Ausführungsbeispielen im Vergleich zum Stand der Technik (Celluloseether mit schaumgenerierenden Systemen (Tensiden)) näher erläutert.

Die zum Einsatz gelangten Celluloseether bzw. physikalischen Mischungen von Celluloseethern werden durch die in Tabelle 1 bezeichneten Kenndaten charakterisiert.

Tabelle 1

| Charakteristische Kenndaten von im Rahmen der Erfindung ausgetesteten Celluloseethern und Celluloseetherabmischungen | | | | | |
|---|---|---|---|---|---|
| Produkt-Nr. | Celluloseether | Substitutionsgrad | | | Trockengehalt | Viskosität [mPa.s][4] |
| | | DS-Me[1] | DS-CM[2] | MS-HE[3] | [%] | |
| 1 | CMC[5] | - | 0,81 | - | 95 | 2472[9] |
| 2 | MHEC[6] | 1,60 | - | 0,28 | 96,7 | 30000 |
| 3 | MHEC : CMC (50 : 50)[7] | 1,60 | 0,88 | 0,28 | 92,3 | 38000 |
| 4 | CMC[8] | - | 0,58 | - | 95,6 | 30000 |

[1] Durchschnittlicher Substitutionsgrad durch Methylgruppen (Me)

[2] Durchschnittlicher Substitutionsgrad durch Carboxymethyl-(CM)

[3] Molarer Substitutionsgrad durch Hydroxyethyl-(HE)

[4] Viskosität gemessen als 2gew.-%ige, wäßrige Lösung in einem Rotationsviskosimeter (Haake) bei D = 2,5 s$^{-1}$, T = 20 °C

[5] Carboxymethycellulose; Handelsmuster Fa. Daiichi Kasei Sangyo Kabushiki Kaisha, Japan

[6] Methylhydroxyethylcelluloseether; Walocel MKX 30000 PF 01® (Wolff Walsrode AG)

[7] Physikalische Mischung aus 50 Gew.-% Methylhydroxyethylcellulose (Walocel MK 30000 PF 01® (Wolff Walsrode)) und 50 Gew.-% Carboxymethylcellulose (Walocel CRT 30000 P® (Wolff Walsrode AG))

[8] Walocel VP-C-2427® (Wolff Walsrode AG))

[9] Brookfield RVT, Spindel 5/100 UpM, T = 25 °C, c = 2 %

Der Einsatz der erfindungsgemäß beanspruchten Zubereitungen wird mittels der nachfolgend beschriebenen Labormethoden exemplarisch im Vergleich zum Stand der Technik beschrieben. Die erforderlichen Eigenschaften und Wirkungen der Zubereitung sind von den sich jeweils ändernden geologischen Bedingungen (Bodenart, Körnung etc.) abhängig und werden durch die sehr unterschiedlichen Anforderungen, die an das Boden-Zusatzmittelgemisch gestellt werden (z.B. Abdichtung gegen drückendes Wasser, Verringerung des Scherwiderstandes für Schneid- und Mischrad, Herstellen eines homogenen Gemisches von geeigneter Konsistenz für die verschiedenen Abförderungsmöglichkeiten aus dem Tunnel und zur Deponie, Deponiefähigkeit u. a.) bestimmt, so daß die in den Beispielen erwähnten Mengenangaben von den tatsächlichen, in der Praxis zum Einsatz kommenden Mengen abweichen können.

Folgende Untersuchungen der Gele bzw. des Gemisches aus Boden und Zugabemittel wurden vorgenommen:

1. Bestimmung der Geldichte in Anlehnung an DIN 18126
2. Ermittlung des Ausbreitmaßes nach DIN 1048, Teil 1
3. Ökotoxikologische Bestimmung an verschiedenen Musterböden
4. Rheologische Charakterisierung der Gele und Schäume im Vergleich
5. Bestimmung der relativen Standzeit der Gele
6. Bestimmung des Durchlässigkeitsbeiwertes in Anlehnung an DIN 18130, Teil 1

Für die Untersuchung der Eigenschaften eines Boden-Gel-Gemisches wurde ein Musterboden ( „Z 1") mit definierten Anteilen von Sand- und Kiesfraktionen eingesetzt. Der verwendete Boden ist in Bild 1 durch seine Körnungslinien nach DIN 18 123 beschrieben.

Die Bestimmung der Geldichte wurde in Anlehnung an DIN 18 126 durchgeführt, in dem das im Schaumgenerator erzeugte Gel in einen Behälter mit einem definierten Volumen gefüllt und anschließend unter Berücksichtigung des Behältergewichtes gewogen wurde. Die Dichte des Geles ergibt sich aus der Formel:

$$\gamma = \frac{Gewicht}{Volumen}[g/cm^3]$$

Für die Bestimmung der relativen Standzeit wurden die Gele und Schäume in ein Becherglas gefüllt. Als Meßwert der Standzeit wurde die Zeit definiert, bis sich aus einem definierten Schaumvolumen von 1,0 L im Becherglas eine Flüssigkeitsmenge von 1,0 cm Höhe (entspricht ca. 5 % des Schaumvolumens) abgesetzt hatte oder die Schaumoberfläche auf unter 75 % der Behälteroberfläche abgesunken war. Werte über 120 Minuten wurden aus anwendungsorientierten Gründen als ausreichende Standzeit angesehen.

Bild 1: Körnungskurve des Musterbodens Z 1

Körnungslinie Z1

Zur Konsistenzbestimmung des Boden-Zusatzmittel-Gemisches im Arbeitsraum und an der Förderschnecke wurde das Ausbreitmaß nach DIN 1048, Teil 1 ermittelt. Hierbei wurde das Boden-Gel-Gemisch in zwei Lagen lose in die Kegelstumpfform eingefüllt und abschließend ohne Verdichtungswirkung an der Oberkante der Form abgestrichen. Danach wurde die Form nach oben abgezogen und anschließend innerhalb von 15 Sekunden die Platte des Versuchstisches 15 mal bis zum Anschlag gehoben und frei fallengelassen. In Ergänzung des Versuches nach DIN 1048, Teil 1 wurde das Ausbreitmaß direkt nach dem Hochziehen der Form nach ca. 10 Sekunden nach 5 - und 10-maligem Fallenlassen des Versuchstisches bestimmt (Tabelle 3, Spalten „Ausbreitmaß"). Die Versuchsdurchführung verlängerte sich dadurch auf ca. 2 Minuten nach dem Ausbau des Versuchsgemisches aus der Durchströmungsapparatur. Die Versuchsergebnisse ergeben im Zusammenhang mit den zeitgleichen visuellen Betrachtungen einen Anhalt über den Zusammenhalt und das Verformungsverhalten des Gemisches.

Bei dem derzeitigen Stand der Kenntnisse über die Korrelation zwischen Ausbreitmaß und Eignungsgemisch für ein Erddruckschild, können Werte von Ausbreitmaßen zwischen 35 cm und 40 cm als geeignet angesehen werden. Bei Werten unter 35 cm muß in Abhängigkeit der jeweils aktuellen Körnungslinie und der Mineralogie untersucht werden, ob der Boden auch ausreichend pastöse Eigenschaften besitzt. Bei Werten über 40 cm ist die erforderliche Undurchlässigkeit des Gemisches zu ermitteln. Weiterhin ist in diesen Fällen zu prüfen, ob das Material für einen Bandtransport geeignet ist und ggf. vor der Deponierung nachbehandelt werden muß. Für das Ausbreitmaß wurden mit Schaum durchströmte Bodenproben verwendet, so daß alle Porenräume mit Schaummaterial gefüllt waren. Dieser Zustand entspricht in etwa dem eines abgebauten Bodens im Erddruckschild. Die tatsächlich erforderliche Menge an einzusetzendem Gel ist u. a. von der jeweiligen Bodenart, dem Grundwasserstand sowie der Bauart des Schildes abhängig und kann von den in den Versuchen verwendeten Mengen deutlich abweichen. Die Menge des zu verwendenden Vernetzungsreagenzes zur Gelbildung ist dabei einerseits von der Art, Menge und vom Molekulargewicht der eingesetzten wasserlöslichen Biopolymere, insbesondere des Celluloseethers bzw. der Celluloseetherabmischung abhängig. Andererseits legen technische Erfordernisse fest, wie ausgeprägt die Festigkeit des zu verwendenden Gels sein muß.

Im Anschluß an die Bestimmung des Ausbreitmaßes wurde dasselbe Material wieder in die Durchströmungsapparatur nach Maidl (U. Maidl, Dissertation, Mitteilung Nr. 95-4), Ruhruniversität Bochum, Institut für konstruktiven Ingenieurbau 1995) eingebracht und die Anfangsdurchlässigkeit bei einem Differenzdruck von 0,2 bar bestimmt (siehe Tabelle 3).

In der nachfolgende Tabelle (Tabelle 3) sind die Ergebnisse der anwendungstechnischen Untersuchungen aufgeführt. Der Musterboden wurde dabei mit Celluloseethern und Tensiden im Vergleich zu den erfindungsgemäß beanspruchten Zubereitungen ausgetestet.

**Tabelle 3**: Ergebnisse der anwendungstechnischen Austestungen im halbtechnischen Maßstab

| Lfd Nr. | Produkt-Nr.[1] | Celluloseether[4] (Konzentration) | Aluminiumsulfat [%] | Tensid | Tensid-konzentration [g/L] | Dichte [g/L] | Zerfallszeit für 1cm Abscheidewasser [min] | Anfangsdurchlässigkeit des Gemisches mit Wasser [m/s] | Eindringung Schaum[6] [m/s] | Ausbreitmaß [cm] nach x Schlägen auf dem Ausbreittisch (0) | (5) | (15) | Bemerkung |
|---|---|---|---|---|---|---|---|---|---|---|---|---|---|
| 1 | - | - | - | - | - | - | - | $5 \cdot 10^{-4}$ | - | 0 | - | - | Nullprobe Boden |
| 2 | 1 | CMC (9 g/L) | - | 5) | 3 | 90 | 90 | $4{,}5 \cdot 10^{-5}$ | $2 \cdot 10^{-5}$ | 33 | 40 | 46 | Stand der Technik |
| 3 | 2 | MHEC (7 g/L) | - | 5) | 3 | 165 | 45 | $3 \cdot 10^{-5}$ | $1 \cdot 10^{-5}$ | 44 | 48 | 52 | Stand der Technik |
| 4 | 3 | MHEC/CMC (7 g/L) | 0,18 | 2) | 3 | 300 | > 120 | $8{,}5 \cdot 10^{-6}$ | $7{,}5 \cdot 10^{-6}$ | 20 | 36 | 38 | Erfindung |
| 5 | 3 | MHEC/CMC (7 g/L) | 0,12 | 3) | 3 | 285 | > 120 | $7 \cdot 10^{-6}$ | $2 \cdot 10^{-6}$ | 30 | 36 | 40 | Erfindung |
| 6 | 4 | CMC (7 g/L) | 0,18 | 3) | 3 | 300 | 60 | $4 \cdot 10^{-6}$ | $1{,}7 \cdot 10^{-6}$ | 30 | 40 | 46 | Erfindung |

1) Produktkenndaten siehe Tabelle 1
2) Tensid OMC 181® (Fa. Henkel KGaA, Düsseldorf)
3) Tensid OMC 853 B ® (Fa. Henkel KGaA, Düsseldorf)
4) Celluloseether siehe Tabelle 1
5) Tensid OK 1, anionisches Sulfonat, Handelsmuster Fa. Daiichi Kasei Sangyo Kabushiki Kaisha, Japan; Feststoffgehalt: 19,8 %
6) Die Eindringung des Schaumes wurde als sichtbare Eindringung der Schaumunterkante in den Boden und zur Kontrolle aus dem verdrängten Wasservolumen in der Versuchsapparatur nach Maidl ermittelt. Der im Versuchszylinder über dem Boden verbleibende Freiraum wurde mit Schaum gefüllt. Bis zum Abbruch nach dem Erreichen der Bodenunterkante war damit ausreichend Schaum vorhanden

Bei den rheologischen Untersuchungen wurde das Ziel verfolgt, die erfindungsgemäß beanspruchten Gele eindeutig zu charakterisieren und diese vom Stand der Technik (Schäume) abzugrenzen. Mit einem Platte-Platte-System wurden daher Oszillationsmessungen vorgenommen. Aus Kenntnis der Kraft bzw. Schubspannung $\tau$ (stress) der

Verformung $\gamma$ (strain) und der Phasenverschiebung $\delta$ läßt sich das viskoelastische Verhalten eines Materials vollständig durch zwei Kenngrößen beschreiben [J. D. Ferry: „Viscoelastic Properties of Polymers", Wiley & Sons, New York 1980). Die eine Kenngröße bezeichnet den Speichermodul: $G' = (\tau_0/\gamma_0) \cdot \cos \delta$. Dieser beschreibt unmittelbar die Elastizität des Materials ($\tau_0$ und $\gamma_0$ sind die Amplituden der Schubspannung und Verformung). Der Verlustmodul kennzeichnet dabei die zweite Kenngröße, die durch folgende mathematische Gleichung beschrieben wird: $G'' : (\gamma_0/\tau_0) \cdot \sin \delta$

Der Verlustmodul beschreibt dabei die Fähigkeit des Materials, die Deformationsenergie in Wärme umzuwandeln. Die beiden Grenzfälle mit $\delta = 0$ °C bzw. $\delta = 90$ °C beschreiben das Verhalten rein elastischer bzw. rein viskoser Substanzen.

Die im folgenden durchgeführten dynamischen Oszillationsmessungen wurden mit einem Platte-Platte-System im viskoelastischen Bereich ($\gamma$ con. = 0,4) durchgeführt. Die rheologischen Meßergebnisse sind im Anhang aufgeführt. Überall dort, wo der elastische Anteil oberhalb des viskosen Anteils liegt, handelt es sich um Substanzen, die im rheologischen Sinne (s. o.) als Gele zu bezeichnen sind ($G' > G''$). In der nachfolgend bezeichneten Tabelle werden die Ergebnisse der rheologischen Messungen nochmals zusammengefaßt.

Tabelle 4

| Lfd.-Nr. | Produktzusammensetzung | | | physikochemischer Zustand[1] | Bemerkung |
|---|---|---|---|---|---|
| | Celluloseether | Tensid | Aluminiumsulfat | | |
| 1 | MHEC[2] | - | - | $G'' > G'$ (viskoelastische Flüssigkeit) | Stand der Technik; schlechte Schaumbildung, Schaum zerfällt sofort |
| 2 | CMC[2] | [3] | - | $G'' > G'$ (viskoelastische Flüssigkeit) | Stand der Technik; Schaum zerfällt innerhalb von Minuten |
| 3 | MHEC[2] | [3] | - | $G'' > G'$ (viskoelastische. Flüssigkeit) | Stand der Technik; Schaum zerfällt innerhalb von Minuten |
| 4 | MHEC/CMC[4] | [3] | 0,18 % | $G' > G''$ (Gel) | Erfindung; stabiles Gel, haltbar über > 3 Wochen |
| 5 | MHEC/CMC[4] | - | 0,06 % | $G' > G''$ (Gel) | Erfindung; stabiles Gel, haltbar über > 3 Wochen |

[1] siehe Anhang
[2] Produktkenndaten siehe Tabelle 1, lfd.-Nr. 2, c = 0,7 %
[3] Tensid OMC 853 b ®, Fa. Henkel KGaA, Düsseldorf, c = 3 %
[4] Produktkenndaten siehe Tabelle 1. lfd.-Nr. 3, c = 0,7 %

Ziel bei den anwendungstechnischen Untersuchungen war es, kostengünstige und einfach herstellbare Produkte bereizustellen, die anwendungstechnisch den Stand der Technik mindestens einstellen (je nach Anwendung, Ergiebigkeit, Durchlässigkeitveränderungen usw.) sowie niedrige DOC-Werte für das Boden-Zusatzmittelgemisch ergeben und somit im Vergleich zum Stand der Technik ökologisch und technisch unbedenklich deponierbar sind.

Das Ergebnis der Untersuchungen zeigt, daß nach dem Stand der Technik mit Methylhydroxyethylcelluloseethern ohne Tensidzusätze Schäume erhalten werden, deren flüssige Zustandsform insbesondere bei größeren Grundwassergegendrücken von Nachteil ist, da eine aodichtende Wirkung gegen drückendes Wasser auch durch Erhöhung der Schaumzugabemenge nicht erreicht werden kann, da die Durchlässigkeit des Gemisches in der Förderschnecke zu groß ist. Bei einem Einsatz von Tensiden werden zwar Schäume erzeugt, die für die vorgenannte Anwendung einsetzbar sind (siehe Tabelle 4, lfd. Nr. 2, [CMC]), allerdings läßt der hohe DOC-Wert (siehe Tabelle 5) eine Deponierung in Bauschuttdeponien o.ä. nicht zu.

Bei Einsatz der erfindungsunggemäß beanspruchten Gele ist es dagegen möglich, den Tensideinsatz zu reduzieren oder vollständig auf den Einsatz von Tensiden zu verzichten (s. lfd. Nr. 5 in Tabelle 4), so daß bei gleichen technischen Vorteilen die ökotoxikologisch unbedenkliche Deponierung des Abraums sichergestellt werden kann.

Tabelle 5: Ökologische Ergebnisse im Vergleich zum Stand der Technik

| Lfd.-Nr. | Celluloseether/ Produkt-Nr.[1] | Bemerkung | Ammonium-Stickstoffgehalt [mg/L] | CSB[5] [mg(O)/L] | Analytik des Bodens (Eluat)[4] | | | Feuchte des Bodens [%] |
|---|---|---|---|---|---|---|---|---|
| | | | | | Leitfähigkeit [μS/cm][3] | DOC [mg/L][2] | pH-Wert | |
| 1 | Boden-nullprobe | - | 0,02 | <2 | 52,2 | 1,7 | 9,58 | 3,5 |
| 2 | 1 | Stand der Technik | 0,09 | 72 | 81,0 | 24,1 | 9,37 | 7,6 |
| 3 | 2 | Stand der Technik | 0,04 | 79,8 | 82,4 | 31,5 | 9,08 | 8,6 |
| 4 | 3 | Erfindung | 0,13 | 36,5 | 76,5 | 15,5 | 8,94 | 4,7 |
| 5 | 4 | Erfindung | 0,38 | 53,6 | 50,5 | 19,1 | 9,04 | 3,6 |

1) Charakteristische Produktkenndaten s. Tabelle 1
2) Im Eluat des Bodens bzw. Boden-Schaumgemisches enthaltener gelöster organisch gebundener Kohlenstoff (DIN 38409 H3-1)
3) Leitfähigkeit nach DIN 38404 C5 aus dem Eluat
4) Leitfähigkeit, DOC und pH-Wert aus dem Eluat (Zentrifugat 2800 Umdrehungen/3 Min.). Eluat nach DIN 38414 S4 (ca. 100g Trockenmasse pro 1 L Wasser; Dauer 24 (h), 10 UpM).
5) Chemischer Sauerstoffbedarf, photometrisch nach Küvettentest (Dr. Lange)

Oszillationsversuch eines Gemisches aus CMC und Tensid ohne Boden (Stand der Technik). Produktkenndaten s. Tabelle 1, Produkt-Nr 1 (CMC) und Tabelle 3, lfd.-Nr. 2.

## Oszillationsversuch eines Gemisches aus Carboxymethylcellulose und Tensid

### (Stand der Technik)

23.05.1996; OK 1 Tensid (c= 3%) + CK 2 CMC (c= 0,9%); MC20 SN03201058; MP 31 d=0,5 mm

⊡ G'  Speichermodul

▽ G" Verlustmodul

gamma (konstant)= 0,4

Oszillationsversuch eines Gemisches aus Methylhydroxyethylcellulose (MHEC) und Tensid ohne Boden (Stand der Technik). Produktkenndaten s. Tabelle 1, Produkt-Nr. 2 (MHEC) und Tabelle 4, lfd. Nr. 3

Oszillationsversuch eines Gemisches aus MHEC und Tensid

(Stand der Technik).

MP 31 d=0,5 mm     ⊟ 6' Speichermodul    ▽ 6'' Verlustmodul
Probe: LP-M-4834 (c= 0,7%) + 3% OMC 853b (Fa. Henkel KGaA, Dusseldorf); gamma (konstant) = 0,4

Oszillationsversuch eines Gemisches aus MHEC/CMC und Vernetzungsreagenz und Tensid ohne Boden (Erfindung). Produktkenndaten s. Tabelle 1, Produkt-Nr. 3 (MHEC/CMC) und Tabelle 4, lfd. Nr. 4.

### Oszillationsversuch eines Gemisches aus MHEC und CMC und Tensid

### (Erfindung)

MP 31 d=0,5 mm     6' Speichermodul     6'' Verlustmodul
Probe: LP-M-4827 (7g/L) + 3% DMC 853b (Fa. Henkel KGaA, Düsseldorf) + 0,18% Aluminiumsulfat; gamma (konstant) = 0,4

Oszillationsversuch eines Gemisches aus MHEC/CMC und Vernetzungsreagenz ohne Tensid und ohne Boden (Erfindung). Produktkenndaten s. Tabelle 1, Produkt-Nr. 3 (MHEC/CMC) und Tabelle 4, lfd.-Nr. 5.

**Oszillationsversuch eines Gemisches aus MHEC und CMC und**

**Vernetzungsmittel (Aluminiumsulfat) ohne Tensid**

**(Erfindung)**

08.05.1996; Aerogel; LP-M-4834 (c= 0,7%) + 0,06% Aluminiumsulfat; MC20 SN03201058; MP 31 d=0,5 mm

—□— G' Speichermodul

—▽— G" Verlustmodul

gamma (konstant)= 0,4

**Patentansprüche**

1. Verfahren zum Stützen der Ortsbrust und des anstehenden Grundwassers bei Vortriebssystemen, insbesondere mit Erddruckschilden betriebenen Schildsystemen für den Tunnelbau im begehbaren und nichtbegehbaren Bereich sowie Microtunnelling bei dem der abgebaute Boden in der Erddruckkammer mit einem fluidisierenden Medium vermischt und durch gezieltes Abführen des Gemisches in der Erddruckkammer ein dem Erddruck und dem Grundwasserdruck entgegenwirkender Druck erzeugt wird, dadurch gekennzeichnet, daß das dem abgebauten Boden zugeführte fluidisierende Medium ein die Durchlässigkeit des Bodens verringerndes Gel ist und daß durch Mischen und Verrühren im Abbauraum oder der Förderschnecke ein Gemisch aus Boden und Gel hergestellt wird.

2. Verfahren nach Anspruch 1, dadurch gekennzeichnet, daß das Gel aus mindestens einer wasserlöslichen hochmolekularen Substanz und mindestens einer oberflächenaktiven Substanz und einem Vernetzungsmittel besteht.

3. Verfahren nach mindestens einem der oben genannten Ansprüche, dadurch gekennzeichnet, daß das wasserlösliche hochmolekulare Produkt oder Produktgemisch mindestens einen Polysaccharidether, insbesondere Celluloseether bezeichnet.

4. Verfahren nach mindestens einem der oben genannten Ansprüche, dadurch gekennzeichnet, daß es sich bei dem Celluloseether oder dem Celluloseethergemisch um Carboxymethylcelluloseether, Sulfoethylcelluloseether, Hydroxyethylcellulose-, Hydroxypropylcellulose-, Ethylcellulose-, Methylcellulose-, Methylhydroxyethylcellulose- oder Methylhydroxypropylcelluloseether handelt.

5. Verfahren nach mindestens einem der oben genannten Ansprüche, dadurch gekennzeichnet, daß es sich bei der oberflächenaktiven Substanz um Tenside oder Tensidgemische, insbesondere um nicht-ionische, anionische, kationische oder amphotere Tenside handelt.

6. Verfahren nach mindestens einem der oben genannten Ansprüche, dadurch gekennzeichnet, daß es sich bei der oberflächenaktiven Substanz um nichtionische Tenside sowie Abmischungen derselben mit anionischen, kationischen oder amphoteren Tensiden handelt.

7. Verfahren nach mindestens einem der oben genannten Ansprüche, dadurch gekennzeichnet, daß es sich bei der oberflächenaktiven Substanz um Tenside aus nachwachsenden Rohstoffen, insbesondere um nicht-ionische Tenside vom Typ der Alkylpolyglycoside handelt, die allein oder in Kombination mit herkömmlichen anionischen, nicht-ionischen oder amphoteren Tensiden eingesetzt werden.

8. Verfahren nach mindestens einem der oben genannten Ansprüche, dadurch gekennzeichnet, daß es sich bei der oberflächenaktiven Substanz um nichtionische Tenside vom Typ der Alkylpolyglycoside mit Alkylkettenlängen von $C_4$ - $C_{30}$ handelt.

9. Verfahren nach mindestens einem der oben genannten Ansprüche, dadurch gekennzeichnet, daß ein Gemisch aus einem ionischen und nicht-ionischen Celluloseether verwendet wird, wobei es sich bei der ionischen Komponente um Carboxymethylcelluloseether oder Sulfoethylcelluloseether und bei der nicht-ionischen Komponente um Hydroxyethylcellulose-, Hydroxypropylcellulose-, Ethylcellulose-, Methylcellulose-, Methylhydroxyethylcellulose- oder Methylhydroxypropylcelluloseether handelt.

10. Verfahren nach mindestens einem der oben genannten Ansprüche, dadurch gekennzeichnet, daß es sich bei dem Vernetzungsmittel um Borverbindungen, zwei- oder dreiwertige Kationen, mono-, bi- oder mehrfachfunktionelle Aldehyde, organische oder anorganische Säuren, Harnstoff oder Harnstoffderivate, mehrwertige Epoxide, Epichlorhydrin sowie weitere zur Vernetzung befähigte Verbindungen handelt.

11. Einsatz nach mindestens einem der o.g. Ansprüche, dadurch gekennzeichnet, daß die Produkte im Tiefbau zum Stützen and Abdichten von Böden zur Sicherung und Abstützung von Deponien, Baugruben oder Baugrubenwänden sowie beim Erstellen und Sichern von Trägerbohlwänden, Spundwänden, Bohrpfahlwänden, Schlitzwänden, Injektionswänden und für Solabdichtungen verwendet werden.

**Europäisches Patentamt**

# EUROPÄISCHER RECHERCHENBERICHT

Nummer der Anmeldung

EP 97 12 0718

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y,P | DE 195 30 077 A (WOLFF WALSRODE AG)<br>* Seite 3, Zeile 12 - Zeile 68 *<br>* Seite 4, Zeile 33 - Zeile 40 *<br>--- | 1-11 | C09K17/32<br>C09K7/02<br>E21D9/06<br>C08L1/28 |
| Y | US 4 300 634 A (R.L.CLAMPITT)<br>* Spalte 2, Zeile 9 - Spalte 4, Zeile 16 *<br>* Spalte 5, Zeile 52 - Spalte 6, Zeile 4 *<br>* Spalte 7, Zeile 19 - Zeile 31 *<br>--- | 1-11 | |
| Y | GB 2 290 798 A (PROCTER & GAMBLE)<br>* Seite 2, Absatz 3 *<br>* Seite 5, Zeile 1 - Seite 6, Zeile 5 *<br>* Seite 9, Absatz 2 *<br>--- | 3-9 | |
| Y | DATABASE WPI<br>Section Ch, Week 8944<br>Derwent Publications Ltd., London, GB;<br>Class A93, AN 89-320819<br>XP002059230<br>& JP 01 239 293 A (FUJITA KOGYO KK) ,<br>25.September 1989<br>* Zusammenfassung *<br>----- | 1,3 | **RECHERCHIERTE SACHGEBIETE (Int.Cl.6)**<br><br>C09K<br>E21D<br>C08L |

Der vorliegende Recherchenbericht wurde für alle Patentansprüche erstellt

| Recherchenort | Abschlußdatum der Recherche | Prüfer |
|---|---|---|
| DEN HAAG | 17.März 1998 | Boulon, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)